Europäisches Patentamt

European Patent Office

Office européen des brevets

(11) Veröffentlichungsnummer: **0 618 694 A2**

## EUROPÄISCHE PATENTANMELDUNG

(21) Anmeldenummer: **94104953.8**

(51) Int. Cl.5: **H04J 3/06**, H04J 3/14

(22) Anmeldetag: **29.03.94**

(30) Priorität: **01.04.93 DE 4310711**

(43) Veröffentlichungstag der Anmeldung:
**05.10.94 Patentblatt 94/40**

(84) Benannte Vertragsstaaten:
**AT CH DE FR IT LI**

(71) Anmelder: **ANT Nachrichtentechnik GmbH**
**Gerberstrasse 33**
**D-71522 Backnang (DE)**

(72) Erfinder: **Reuber, Hans-Jürgen**
**Werastrasse 135**
**D-70190 Stuggart (DE)**

(54) Verfahren zur Laufzeit-und Taktphasensynchronisation von Datensignalen.

(57) Datensignale, die aus einer Nachrichtenquelle stammen, über verschiedene Übertragungswege übertragen werden und auf diesen Wegen mit unterschiedlichen Störsignalen beaufschlagt werden müssen im Empfänger synchronisiert und nachgeregelt werden.

Die empfangenen Datensignale werden empfangsseitig mit ihrem jeweiligen Takt jeweils in einen elastischen Speicher eingelesen. Der gemeinsame Ausgabetakt der elastischen Speicher wird über eine phasenstarre Regelschleife (PLL) so eingestellt, daß Ein- und Ausleseadresse des Speichers im Betriebskanal um 180° gegeneinander verschoben sind. Eine Synchronisationsschaltung stellt in den Ersatzkanälen die relative Position von Schreib- und Lesezeiger zueinander solange nach, bis die Ausgangssignale in den Ersatzkanälen und im Betriebskanal keinen Laufzeitunterschied mehr aufweisen. Das Fehlersingal der Regelschleife wird aus der modulo-2 Summe der Datensignale am Ausgang der elastischen Speicher gebildet. Die Synchronisationsschaltung summiert das Fehlersignal über eine Schätzdauer von N Takten auf und vergleicht es mit einem Schwellwert. Wird dieser überschritten, wird der asynchrone Zustand angenommen und die Verzögerung des Signals im Ersatzkanal um eine Taktperiode verändert. Wird der Schwellwert unterschritten, synchroner Zustand, bleibt die Verzögerung unverändert.

EP 0 618 694 A2

Rank Xerox (UK) Business Services
(3.10/3.09/3.3.4)

EP 0 618 694 A2

Die Erfindung betrifft ein Verfahren zur Synchronisation von Datensignalen, die aus einer Nachrichtenquelle stammen, über verschiedene Übertragungswege übertragen und auf diesen Wegen mit unterschiedlichen Störsignalen sowie zeitvarianten Laufzeit- und Taktphasenverschiebungen beaufschlagt werden.

Zur Verbesserung von Qualität und Verfügbarkeit digitaler Übertragungssysteme kann die $n+m$-Ersatzschalttechnik eingesetzt werden. Dabei werden für die Übertragung von n Datensignalen insgesamt $n+m$ Kanäle zur Verfügung gestellt. Verschlechtert sich die Sinalqualität in einem der n Betriebskanäle, so kann das betreffende Signal über einen der m Ersatzkanäle umgeleitet werden. Um einen störungsfreien Betrieb zu gewährleisten, müssen im Empfänger die über Betriebs- und Ersatzkanal ankommenden Daten vor dem Umschalten bezüglich der auftretenden zeitvarianten Laufzeit- und Taktphasendifferenzen synchronisiert und fortlaufend nachgeregelt werden.

Im vorliegenden Anwendungsfall wird den zu übertragenden Datensignalen eine Rahmenstruktur aufgeprägt. Dadurch ist es unter anderem möglich, aus verschiedenen Quellen stammende und im Sender zu einem Signal zusammengefaßte Daten empfangsseitig wieder zu trennen (z.B. PCM-Systeme). Zusätzlich können kanalspezifische Informationen (sogenannte Hilfskanäle) eingelagert und an die Gegenstelle übertragen werden. Bei der Lösung des Synchronisationsproblems im Empfänger ist dann zu berücksichtigen, daß die zu synchronisierenden Datenströme zwar dieselbe Nutzinformation transportieren, sich jedoch in den zusätzlich eingelagerten Hilfskanalinformationen unterscheiden.

Es ist Aufgabe der Erfindung ein Verfahren zur Laufzeit- und Taktphasensynchronisation von Datensignalen anzugeben, das die oben genannten Anforderungen erfüllt.

Die Aufgabe wird durch ein Verfahren mit den Merkmalen des Patentanspruchs 1 gelöst. Vorteilhafte Weiterbildungen sind den Unteransprüchen zu entnehmen.

Anhand der Zeichnungen soll ein Ausführungsbeispiel der Erfindung erläutert werden.

Es zeigen:

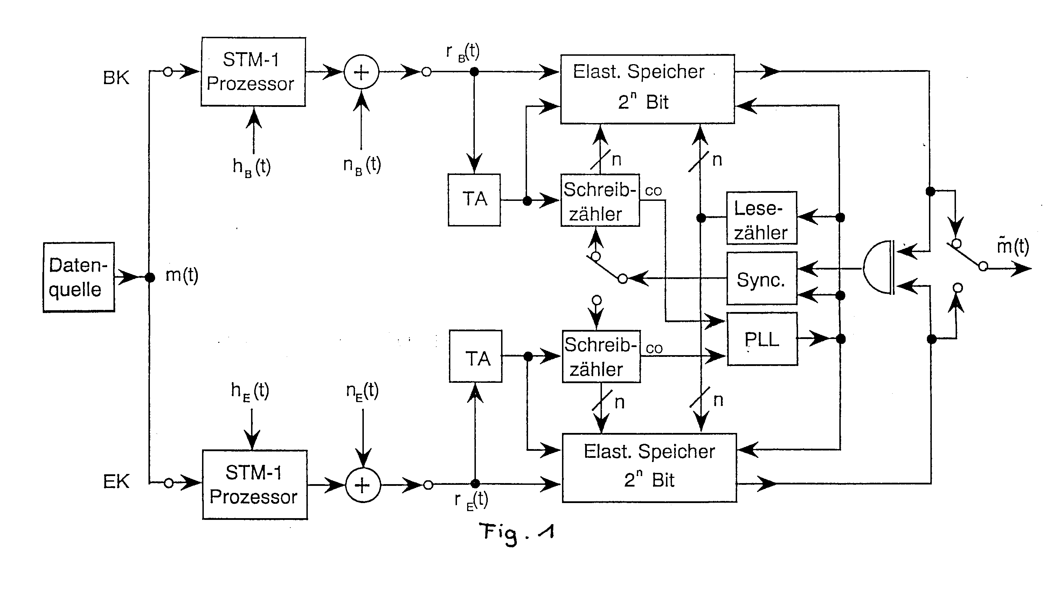

Figur 1: Blockschaltbild Synchronisation

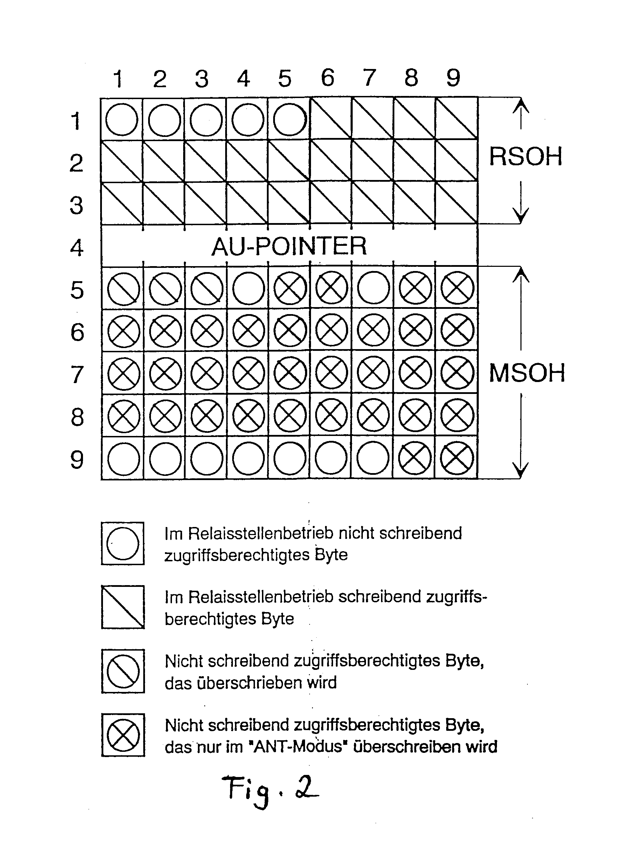

Figur 2: Aufbau des Section Overhead eines STM-1 Signals

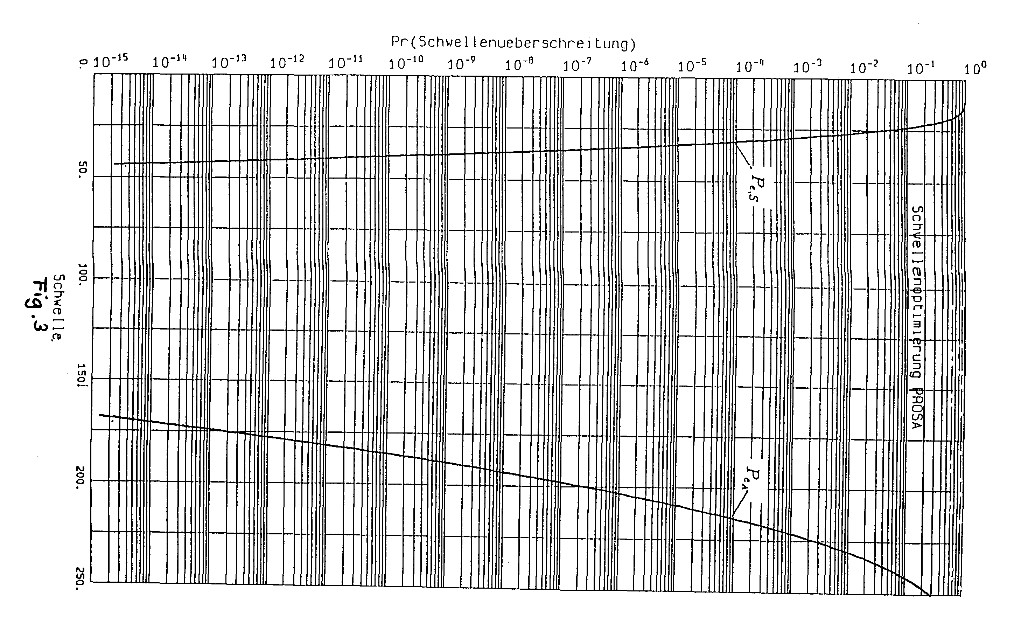

Figur 3: Fehlsynchronisationswahrscheinlichkeiten für BER = $10^{-3}$, N = 512, K = 1

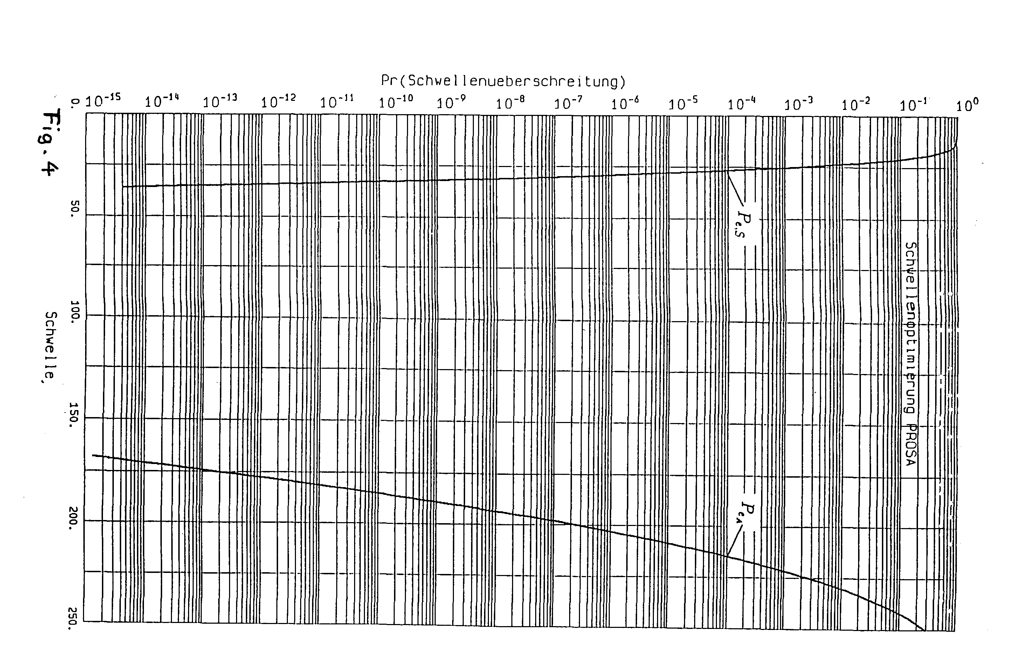

Figur 4: Fehlsynchronisationswahrscheinlichkeiten für BER = $10^{-3}$, N = 512, K = 2

Bild 1 verdeutlicht die Aufgabe anhand eines vereinfachten Blockschaltbildes. Das informationstragende Datensignal $m(t) \epsilon \{0,1\}$ mit der Wahrscheinlichkeitsdichtefunktion

$$WDF(m) = 1/2 \cdot [\delta(m) + \delta(m-1)]$$

wird zunächst z.B. in einen STM-1-Rahmen der synchronen digitalen Hierarchie (SDH) eingelagert und anschließend über zwei verschiedene Kanäle, BK und EK, übertragen. Dabei überlagern sich den Signalen die Rauschbeiträge $n_B(t) \epsilon \{0,1\}$ und $n_E(t) \epsilon \{0,1\}$ mit den Wahrscheinlichkeitsdichtefunktionen

$$WDF(n_B) = BFH_B \cdot \delta(n_B-1) + (1-BFH_B) \cdot \delta(n_B)$$

und

$$WDF(n_E) = BFH_E \cdot \delta(n_E-1) + (1-BFH_E) \cdot \delta(n_E)$$

$n_B(t)$ und $n_E(t)$ nehmen also mit den Wahrscheinlichkeiten $BFH_B$ bzw. $BFH_E$ den Wert 1 und mit den Wahrscheinlichkeiten $(1-BFH_B)$ bzw. $(1-BFH_E)$ den Wert 0 an. Die Überlagerung erfolgt durch Modulo-2 Addition. Ist also $n_B(t)$ bzw. $n_E(t)$ = 1, so wird $m(t)$ invertiert, d.h., es tritt ein Bitfehler auf. Nachfolgend wird angenommen, daß $n_B(t)$ und $n_E(t)$ paarweise statistisch unabhängig sind.

Die Modulo-2-Addition der binären Störsignale $h_B(t) \epsilon \{0,1\}$ und $h_E(t) \epsilon \{0,1\}$ zu dem informationstragenden Signal $m(t)$ repräsentiert die Einlagerung der Hilfskanäle auf den Relaisstellen. Die Hilfskanalinformation wird im Relay-Section Overhead (RSOH), bei einem 2 Mbit/s-Hilfskanal aber auch im Multiplex-Section Overhead (MSOH) des STM-1 Signals übertragen. Bild 2 zeigt den Aufbau des Section-Overhead eines STM-1 Signals. Es wird auf CCITT Recommendation G. 708: Network Node Interface for the Synchronous Digital Hierarchy; K. Ruthemann: Realization of STM 1 in Digital Radio Systems, European Conf. on Radio Relay Systems (ECRR), Paris 1991, S. 72-74 verwiesen. Jedes Quadrat repräsentiert dabei ein Byte. Der STM-1-Rahmen wird zeilenweise abgearbeitet. Das heißt, es wird zunächst die erste Zeile des SOH (9 Byte) und anschließend die 261 Nutzbyte dieser Zeile übertragen, dann die zweite Zeile des SOH und wieder 261 Nutzbyte usw. Es folgen also zyklisch auf 72 SOH-Bits 2088 Nutzbits.

Zur Vereinfachung der Rechnung wird nachfolgend angenommen, daß jedes der SOH-Bits auf den Relaisstellen durch die Einlagerung der Hilfskanäle mit einer Wahrscheinlichkeit von 1/2 verändert wird.

2

Diese Annahme stellt einen Worst-Case Ansatz dar, der allerdings bei einer 2 Mbit/s-Einlagerung annähernd eintritt. Lediglich die Bytes 1 bis 6 in Zeile 1 (Rahmensynchronwort), die AU-Pointer und wenige Bytes des MSOH sind davon ausgenommen.

Bezüglich des Synchronisationsproblems können die "Störsignale" $h_B(t)$ und $h_E(t)$ also als zyklisch auftretende Burstsignale interpretiert werden. Die Burstlänge beträgt dabei 72 Bit, die Periodenlänge 2160 Bit. Für die Dauer des bursts ist die Fehlerwahrscheinlichkeit gleich 1/2, ansonsten gleich 0. Es ergibt sich eine zeitvariante Wahrscheinlichkeitsdichtefunktion.

$$WDF(h, t_0 - i \cdot T) = \begin{cases} 0,5 \cdot [\delta(h) + \delta(h-1)] & \text{für } k \cdot 2160 + 1 \leq i \leq k \cdot 2160 + 72 \\ 1 \cdot \delta(h) & \text{für } k \cdot 2160 + 73 \leq i < (k+1) \cdot 2160 \end{cases}$$

wobei k eine beliebige ganze Zahl ist. Für die empfangenen Datensignale erhält man:

$$r_B(t) = m(t) + n_B(t) \oplus h_B(t)$$

und

$$r_E(t) = m(t + \Delta\tau) + n_E(t) \oplus h_E(t).$$

Dabei steht $\Delta\tau$ für die Laufzeitdifferenz zwischen BK und EK. Das Zeichen "$\oplus$" repräsentiert die modulo-2 Addition.

Eine in der Ersatzschalttechnik gebräuchliche Schaltungsanordnung für die Taktphasensynchronisation und den dynamischen Laufzeitausgleich ist in Bild 1 schematisch dargestellt. Die empfangenen Datensignale $r_B(t)$ und $r_E(t)$ werden mit ihrem jeweiligen Takt in elastische Speicher eingelesen. Der gemeinsame Ausgabetakt wird über eine phasenstarre Regelschleife (PLL) so eingestellt, daß Ein- und Ausleseadresse des Speichers im Betriebskanal um 180° gegeneinander verschoben sind. Eine Synchronisationsschaltung (Sync.) stellt im Ersatzkanal die relative Position von Schreib- und Lesezeiger zueinander solange nach, bis die Ausgangssignale in den beiden Kanälen keinen Laufzeitunterschied mehr aufweisen. Das Fehlersignal e-(t) dieses Regelkreises erhält man aus der modulo-2 Summe (EXOR-Gatter) der Datensignale am Ausgang der elastischen Speicher.

Bezeichnet man mit $\tau_B$ und $\tau_E$ die Signalverzögerung durch die elastischen Speicher im Betriebs- und im Ersatzkanal, so gilt

$$\begin{aligned} e(t) &= r_B(t + \tau_B) \oplus r_E(t + \tau_B) \\ &= m(t + \tau_B) \oplus n_B(t + \tau_B) \oplus h_B(t + \tau_B) \\ &\quad + m(t + \Delta\tau + \tau_E) \oplus n_E(t + \tau_E) \oplus h_E(t + \tau_E). \end{aligned}$$

Für Synchronität muß die Bedingung

$$m(t + \tau_B) \oplus m(t + \Delta\tau + \tau_E) \overset{!}{=} 0$$

erfüllt sein. Dies ist der Fall für $\tau_B - \tau_E = \Delta\tau$. Für das Fehlersignal erhält man dann mit

$$e(t) = n_B(t + \tau_B) \oplus n_E(t + \tau_E) \oplus h_B(t + \tau_B) \oplus h_E(t + \tau_E)$$

einen Ausdruck, der nur noch von den Stör- und Dienstkanalsignalen, aber nicht mehr vom Datensignal m-(t) abhängig ist.

Die Synchronisationsschaltung (Funktionsblock SYNC in Bild 1) arbeitet nach dem Prinzip der Erwartungswertbildung. Sie summiert das Fehlersignal $e(t) \in \{0,1\}$ fortlaufend über N Takte auf und vergleicht das Resultat anschließend mit einem Schwellwert S. Wird dieser überschritten, so ist anzunehmen, daß die

3

beiden Datenströme asynchron sind. In diesem Fall wird die Verzögerung $\tau_E$ im Ersatzkanal um eine Taktperiode gegenüber dem Betriebskanals erhöht bzw. reduziert, je nach der relativen Lage der Leseadressen im Betriebs- und Ersatzkanal zueinander. Wird die Schwelle S unterschritten, wird Synchronität angenommen. Die Verzögerungszeiten der elastischen Speicher werden dann nicht verändert.

Um eine relativ zur Kanaldynamik schnelle Ersatzschaltung realisieren zu können, muß die Synchronität der Datenströme möglichst schnell hergestellt werden. Ist dieser Zustand erreicht, sollte er mit hoher Zuverlässigkeit erhalten werden. Die erste Forderung bedingt eine kurze Erwartungswertbildung, also einen kleinen Wert für N, die zweite Bedingung dagegen eine lange Mittelung und damit einen großen Wert für N. Wenn kein befriedigender Kompromiß möglich ist, besteht die Möglichkeit, die Schätzdauer abhängig vom aktuellen Zustand (synchron/asynchron) umzuschalten. Eine bezüglich der Realisierung günstige Lösung dieses Problems besteht darin, die Dauer des Schätzintervalls konstant zu halten, den Zustand "synchron" jedoch erst dann zu verlassen, wenn der Schwellwert S in K aufeinander folgenden Schätzintervallen überschritten wurde. Auf diese Weise wird ein Hysterese-Effekt realisiert.

Zur Optimierung der Akquisitionszeit und der Zuverlässigkeit des Regelkreises zur Synchronisation stehen die Parameter: N: Dauer des Schätzintervalls in Vielfachen der Taktperiode T, S: Schwellwert und gegebenenfalls, K: Anzahl der Wiederholungen im synchronen Zustand, zur Verfügung. Ihre Wahl ist abhängig von den störungsbedingten Bitfehlerhäufigkeiten $BFH_B$ und $BFH_E$ sowie von der Lage der durch die Einlagerung der Hilfskanäle verursachten Fehlerbündel innerhalb des betreffenden Schätzintervalls.

Eine sichere Synchronisation muß im Grenzfall auch dann noch gewährleistet sein, wenn die Bitfehlerhäufigkeit in beiden Kanälen die Systemschwelle, $BFH = 10^{-3}$, erreicht. Für die nachfolgenden Untersuchungen wird daher angenommen:

$$BFH_B = BFH_E = 10^{-3}$$

Die Lage des SDH-Rahmens relativ zum Schätzintervall wird nachfolgend ebenfalls so gewählt, daß der ungünstigste zu erwartende Betriebsfall eintritt, also stets die maximal mögliche Zahl von Hilfskanalbits $n_{H,max}$ in das Schätzintervall fällt. Mit der SDH-Teilrahmenlänge von 270 Byte ≡ 2160 Bit und der darin enthaltenen ununterbrochenen Folge von 9 SOH-Byte ≡ 72 SOH-Bit gilt.

$$n_{H,max} = \left\lfloor \frac{K \cdot N}{2160} \right\rfloor \cdot 72 + \min \left\{ K \cdot N - \left\lfloor \frac{K \cdot N}{2160} \right\rfloor, 72 \right\}$$

Dabei steht [x] für den ganzzahligen Anteil von x.

Wie bereits erwähnt, wird ferner angenommen, daß die quantisierten Abtastwerte der Rauschsignale $n_B(t)$ und $n_E(t)$ sowie der Hilfskanalinformation $h_B(t)$ und $h_E(t)$ paarweise statistisch unabhängig sind. Die Anzahl der durch sie verursachten Fehlerereignisse innerhalb eines Schätzintervalls ist damit binominalverteilt. Für die weiteren Herleitungen muß zwischen den beiden Fällen unterschieden werden, daß die Datensignale des BK und des EK bezüglich ihrer Laufzeit synchron bzw. asynchron sind.

Im synchronen Zustand ist gemäß obiger Herleitung das Fehlersignal unabhängig von der übertragenen Nutzinformation. Da auf der Sendeseite die Aufteilung in Betriebs- und Ersatzkanal nach dem SDH-Prozess erfolgt, sind auch die SDH-Rahmen am Ausgang der elastischen Speicher laufzeitsynchron. Zur Berechnung des Erwartungswertes für das Fehlersignal e(t) kann die modulo-2 Addition durch die Beziehung

$$a \oplus b = a + b - 2 \cdot a \cdot b$$

für a, b $\epsilon$ {0,1} ersetzt werden. Für die Dauer der übertragenen SOH-Daten gilt dann

$$e_{SOH}(t) = h_B(t + \tau_B) \oplus h_E(t + \tau_E)$$

und wegen der statistischen Unabhängigkeit von $h_B(t)$ und $h_E(t)$

4

$$P_{SOH} = E\{e_{SOH}(t)\} = E\{h_B(t+\tau_B)\} + E\{h_E(t+\tau_E)\}$$
$$-2\cdot E\{h_B(t+\tau_B)\}\cdot E\{h_E(t+\tau_E)\}$$
$$= 1/2.$$

Für die Dauer der übertragenen Informationsdaten gilt dagegen

$$e_{Inf}(t) = n_B(t+\tau_B) \oplus n_E(t+\tau_E)$$

und damit unter den genannten Voraussetzungen

$$P_{Inf} = E\{e(t)\} = E\{n_B(t+\tau_B)\} + E\{n_E(t+\tau_E)\}$$
$$-2\cdot E\{n_B(t+\tau_B)\}\cdot E\{n_E(t+\tau_E)\}$$
$$= BFH_B + BFH_E -2\cdot BFH_B\cdot BFH_E$$
$$= 1{,}998\cdot 10^{-3} \approx 2\cdot 10^{-3}.$$

Damit kann man die Wahrscheinlichkeit berechnen, daß das Integral über das Fehlersignal, genommen über das Schätzintervall die Länge N, den Wert m erreicht. Es gilt:

$$P_S\left(\sum_N e(t) = m\right) = \sum_{j=j_{min}}^{j_{max}} \sum_{k=k_{min}}^{k_{max}} \left[\binom{N-n_H}{j}\cdot P_{Inf}^j \cdot (1-P_{Inf})^{N-n_H-j}\right]$$
$$\cdot \left[\binom{n_H}{k}\cdot P_{SOH}^k \cdot (1-P_{SOH})^{n_H-k}\right]$$
$$= \sum_{j=j_{min}}^{j_{max}} \sum_{k=k_{min}}^{k_{max}} \left[\binom{N-n_H}{j}\cdot P_{Inf}^j \cdot (1-P_{Inf})^{N-n_H-j}\right]$$
$$\cdot \left[\binom{n_H}{k}\cdot \tfrac{1}{2}^{n_H}\right]$$

Dabei ist $n_H$ die Anzahl der in das Schätzintervall fallende SOH-Bits. Für die Grenzwerte der Summationen erhält man:

$$j_{min} = \max\{0, m - n_H\}$$
$$j_{max} = \min\{m, N - n_H\}$$
$$k_{min} = \max\{0, m - j\}$$
$$k_{max} = \min\{m - j, n_H\}$$

Kritisch ist im synchronen Zustand der Fall, daß irrtümlich Asynchronität erkannt wird. Die Laufzeit des elastischen Speichers im Ersatzkanal würde dann um einen Takt verändert, so daß die Synchronität tatsächlich verloren ginge. Dieser Fall tritt dann ein, wenn das Integral über das Fehlersignal im Schätzintervall der Länge N den Schwellwert S erreicht oder überschreitet. Die Wahrscheinlichkeit hierfür beträgt:

$$P_{e,S} = \sum_{i=S}^{N} P_S\left(\sum_N e(t) = i\right)$$

Eine obere Schranke für diese Wahrscheinlichkeit erhält man, wenn man die oben hergeleitete Maximalzahl der SOH-Daten $n_{H,max}$ statt $n_H$ in die Gleichungen einsetzt.

Bei dem erwähnten Verfahren mit K-facher Wiederholung der Schätzung erhält man die resultierende Gesamt-Irrtumswahrscheinlichkeit durch Multiplikation der K Überschreitungswahrscheinlichkeiten für die einzelnen Schätzungen. Dabei sollte allerdings die unterschiedliche Verteilung der insgesamt höchstens $n_{H,max}$ auftretenden SOH-Bits in den Einzelintervallen berücksichtigt werden. Anderenfalls würde sich in der Regel eine zu pessimistische obere Schranke ergeben.

Im asynchronen Zustand entsteht bei der Fehlersignalberechnung entsprechend obiger Herleitung die modulo-2 Summe zweier verschiedener Informationsbits. Für den Erwartungswert des Fehlersignals erhält man dann unabhängig von der Anzahl der auftretenden SOH-Daten:

$$E \{e(t)\} = 1/2$$

Für die Wahrscheinlichkeit, daß das über N Takte aufsummierte Fehlersignal den Wert m erreicht erhält man damit:

$$P_A \left( \sum_N e(t) = m \right) = \binom{N}{m} \cdot 0,5^N$$

Unterschreitet in diesem Fall die Fehlersumme die Schwelle S, wird irrtümlich Synchronität angenommen. Die Laufzeit des elastischen Speichers im Ersatzkanal wird dann nicht verändert, was eine Verzögerung bis zum Erreichen der Synchronität zur Folge hat. Dieses Ereignis tritt mit der Wahrscheinlichkeit

$$P_{e,A} = \cdot 0,5^N \cdot \sum_{i=0}^{S-1} \binom{N}{i}$$

Die Optimierung der Parameter wurde automatisiert.

Bild 3 zeigt für $BER_B = BER_E = 10^{-3}$, N = 512 und K = 1 die berechneten Fehlerwahrscheinlichkeiten im synchronen ($P_{e,S}$) und asynchronen Zustand ($P_{e,A}$) in Abhängigkeit des Schwellwertes S. Für die Anzahl $n^H$ der in das Schätzintervall fallenden SOH-Bits wurde $n_{H,max} = 72$ eingesetzt. Die berechneten Wahrscheinlichkeiten stellen also eine obere Schranke dar. Für Schwellwerte im Bereich von ca. 100...150 ergeben sich praktisch verschwindende Fehlerwahrscheinlichkeiten.

Bild 4 zeigt die Resultate für K = 2 und sonst unveränderte Parameter. Bei der Summation über insgesamt $2 \cdot 512 = 1024$ Takte können wiederum maximal $n_{H,max} = 72$ SOH-Bits auftreten. Der ungünstigste Fall tritt dann ein, wenn diese zu gleichen Teilen in die beiden aufeinander folgenden Intervalle fallen, also $n_H = 36$ gesetzt wird. Ein Vergeblich der Resultate, Bild 3 und Bild 4, zeigt, daß durch die K = 2-fache Wiederholung im synchronen Fall die Fehlerwahrscheinlichkeit $P_{e,S}$ deutlich verbessert werden kann. Praktisch vernachlässigbare Werte für $P_{e,S}$ und $P_{e,A}$ können hier bei Schwellwerten im Bereich von S $\approx 50 ... 150$ erreicht werden.

Für die endgültige Realisierung werden folgende Parameter vorgeschlagen:

| | |
|---|---|
| Intervallänge | N = 512 |
| Wiederholungen | K = 2 |
| Schwelle | S = 64...128 |

Die resultierenden Fehlerwahrscheinlichkeiten entsprechen dem Beispiel in Bild 4. Mit der Wahl einer Zweierpotenz für den Schwellwert S kann die Synchronisationsschaltung vergleichsweise einfach realisiert werden. Ein 6- bzw. 7-Bit-Zähler wird nach einem Reset durch den Pegel des Fehlersignals e(t) getaktet. Eine Überschreitung der Schwelle liegt dann vor, wenn der Zähler nach 512 Datentakten einen Überlauf anzeigt.

**Patentansprüche**

1. Verfahren zur Laufzeit- und Taktphasensynchronisation von Datensignalen, die aus einer Nachrichtenquelle stammen, über verschiedene Übertragungswege übertragen werden und auf diesen Wegen mit unterschiedlichen Störsignalen, sowie zeitvariablen Laufzeit- und Taktphasenverschiebungen beaufschlagt werden, die empfangenen Datensignale werden empfangsseitig mit ihrem jeweiligen Takt jeweils in einen elastischen Speicher eingelesen, der gemeinsame Ausgabetakt der elastischen Speicher wird über eine phasenstarre Regelschleife (PLL) so eingestellt, daß Ein- und Ausleseadresse des Speichers im Betriebskanal um 180° gegeneinander verschoben sind, eine Synchronisationsschaltung stellt in den Ersatzkanälen die relative Position von Schreib- und Lesezeiger zueinander solange nach, bis die Ausgangssignale in den Ersatzkanälen und im Betriebskanal keinen Laufzeitunterschied mehr aufweisen, dadurch gekennzeichnet, daß das Fehlersingal der Regelschleife aus der modulo-2 Summe der Datensignale am Ausgang der elastischen Speicher gebildet wird, daß die Synchronisationsschaltung nach dem Prinzip der Erwartungswertbildung arbeitet, indem sie das Fehlersignal über eine Schätzdauer von N Takten aufsummiert und mit einem Schwellwert vergleicht, wird dieser überschritten, wird der asynchrone Zustand angenommen und die Verzögerung des Signals im Ersatzkanal um eine Taktperiode verändert, wird der Schwellwert unterschritten, synchroner Zustand, bleibt die Verzögerung unverändert.

2. Verfahren nach Anspruch 1, dadurch gekennzeichnet, daß für die Schätzdauer in Abhängigkeit vom aktuellen Zustand der Kanäle (synchron/asynchron) zwischen vorgegebenen Werten umgeschaltet wird.

3. Verfahren nach Anspruch 1, dadurch gekennzeichnet, daß die Schätzdauer konstant gehalten wird, und die Verzögerung des Signals im Ersatzkanal nur dann verändert wird, wenn der Schwellwert in K aufeinanderfolgenden Summierungen überschritten wurde.

Fig. 1

RSOH

AU-POINTER

MSOH

| ⬜◯ | Im Relaisstellenbetrieb nicht schreibend zugriffsberechtigtes Byte |
| ⬜⧅ | Im Relaisstellenbetrieb schreibend zugriffsberechtigtes Byte |
| ⬜⊘ | Nicht schreibend zugriffsberechtigtes Byte, das überschrieben wird |
| ⬜⊗ | Nicht schreibend zugriffsberechtigtes Byte, das nur im "ANT-Modus" überschrieben wird |

Fig. 2

Fig.3

Fig. 4